# EUROPEAN PATENT APPLICATION

(11) **EP 4 781 839 A1**
(43) Date of publication of application: **29.07.2026**
(21) Application number: 24868348.4
(22) Date of filing: 20.09.2024
(51) Int. Cl.: A23L 33/135, A23C 9/123, A23L 2/52

(54) **BRAIN FUNCTION IMPROVER, USE FOR PRODUCTION OF BRAIN FUNCTION IMPROVER, AND METHOD FOR IMPROVING BRAIN FUNCTION**

(30) Priority: 20.09.2023 JP 2023152247
(71) Applicant: Kabushiki Kaisha Yakult Honsha, Tokyo, 105-8660 (JP)
(72) Inventor: HAYAKAWA Hiroko, Tokyo 105-8660 (JP); MATSUDA Kazunori, Tokyo 105-8660 (JP); ISHIKAWA Hiroshi, Tokyo 105-8660 (JP)
(74) Representative: Hoffmann Eitle
(86) International application number: PCT/JP2024/033623
(87) International publication number: WO 2025/063271

(57) **Abstract**

[Object]

Provided are a brain function improving agent that can provide an effect of improving brain functions regardless of sleep status, use for producing the brain function improving agent, and a method for improving brain functions.

[Solving Means]

Provided are a brain function improving agent containing at least one of bacterial cells of Lacticaseibacillus paracasei or a processed product of the bacterial cells as an active ingredient, use of at least one of bacterial cells of Lacticaseibacillus paracasei or a processed product of the bacterial cells for producing a brain function improving agent, and a method for improving brain functions, the method including having Lacticaseibacillus paracasei orally ingested in an amount of 10¹⁰ cfu or more/day by viable bacterial count for a continuous period of at least four weeks.

## Description

### [Technical Field]

The present disclosure relates to a brain function improving agent.

### [Background Art]

The human brain is known to consist of the cerebrum, brainstem, and cerebellum, which coordinate with each other to enable complicated operation, and to perform instruction and determination of thinking, memory, and behavior on the basis of stimulus from the periphery transmitted via the spinal cord. It is also known that, in human normal life, taking a rest or sleep helps recovery from physical and mental fatigue, particularly brain fatigue.

Meanwhile, in modern society, which works around-the-clock, the Internet also has become popular; prolonged working hours, shift work, and other work patterns cause physical and mental fatigue, and poor health ailments derived from brain functions such as sleepiness, lassitude, stiff neck, headache, backache, stomachache, constipation, dizziness, hot flash, hot flush, anxiety, palpitation, eyestrain, memory decline, poor concentration or motivation, and irritability have been pointed out as a social issue. These poor health ailments forecast sickness and cause decreased performance, increased risk of mistakes and accidents occurring, and other events, and the resulting reduced production efficiency leads to economic losses, which also have been problematic (see reference: Corporate "Health and Productivity Management" Guidebook-Recommendation for Health through Collaboration and Cooperation- (revised 1st edition), Healthcare Industries Division, Commerce and Information Policy Bureau, Ministry of Economy, Trade and Industry, kenkokeiei-guidebook2804.pdf (meti.go.jp)). In coping with such poor health ailments derived from brain functions, it is difficult to resolve these quickly only by taking a rest or sleep, and several sleep-independent methods have been proposed.

For example, PTL 1 discloses that docosahexaenoic acid (DHA) ameliorates not only a declined cognitive function of the brain due to aging, dementia, brain disorder, or the like, but also a cognitive response function of the brain in healthy subjects. PTL 2 also discloses that arachidonic acid and/or a compound containing arachidonic acid as a constituent fatty acid prevents, ameliorates, or improves impaired normal responses by cognitive ability of the brain. Further, PTL 3 discloses an effect of improving arousal of the brain before and after tooth brushing.

### [Citation List]

### [Patent Literature]

[PTL 1]
   Japanese Patent Laid-open No. Hei 10-059844
[PTL 2]
   Japanese Translation of PCT International Application Publication No. JP-T-2006-502196
[PTL 3]
   Japanese Patent Laid-open No. 2011-5056

### [Summary]

### [Technical Problem]

The conventional arts described above have not provided a brain function improving agent suitable for the above-mentioned life of modern people. The inventors variously investigated to find out an ingredient that improves human brain functions regardless of whether sleep is sufficient or not. Eventually, the inventors found that, among Lacticaseibacillus, ingestion of bacterial cells of Lacticaseibacillus paracasei or a processed product of the bacterial cells can particularly improve brain functions.

### [Solution to Problem]

To solve the problem exemplified above, a brain function improving agent in an embodiment of the present invention is characterized by containing at least one of bacterial cells of Lacticaseibacillus paracasei or a processed product of the bacterial cells as an active ingredient.

In addition, use in an embodiment of the present invention is also characterized by the use of at least one of bacterial cells of Lacticaseibacillus paracasei or a processed product of the bacterial cells, for producing a brain function improving agent.

Further, a method for improving brain functions in an embodiment of the present invention is characterized by having Lacticaseibacillus paracasei orally ingested in an amount of 10¹⁰ cfu or more/day by viable bacterial count for a continuous period of at least four weeks.

### [Advantageous Effect of Invention]

A brain function improving agent of the present disclosure can provide an effect of improving brain functions regardless of sleep status.

### [Brief Description of Drawing]

[FIG. 1]

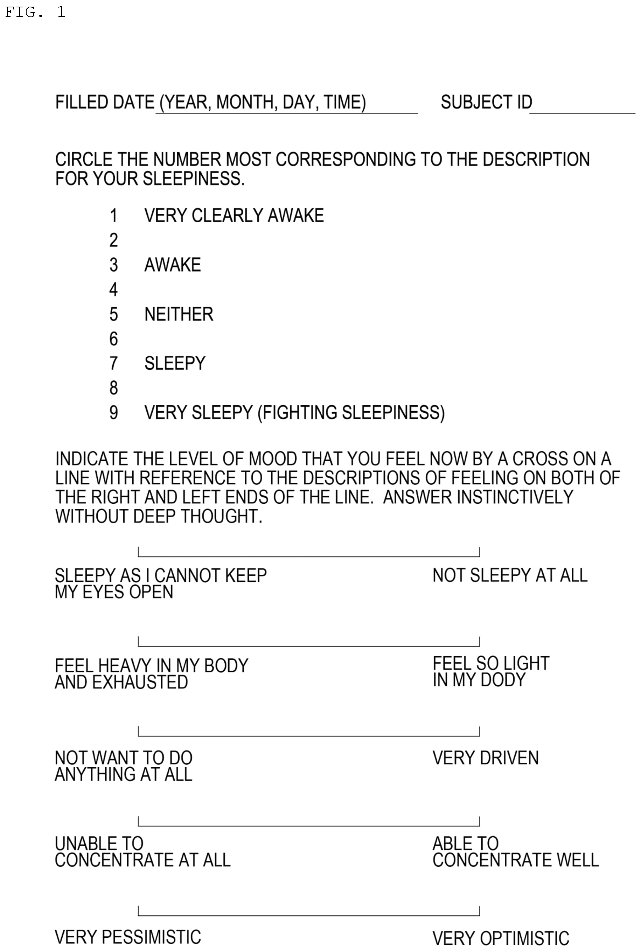

   FIG. 1 illustrates an example of the questionnaires used for a subjective assessment (daytime mood indicators).
[FIG. 2]

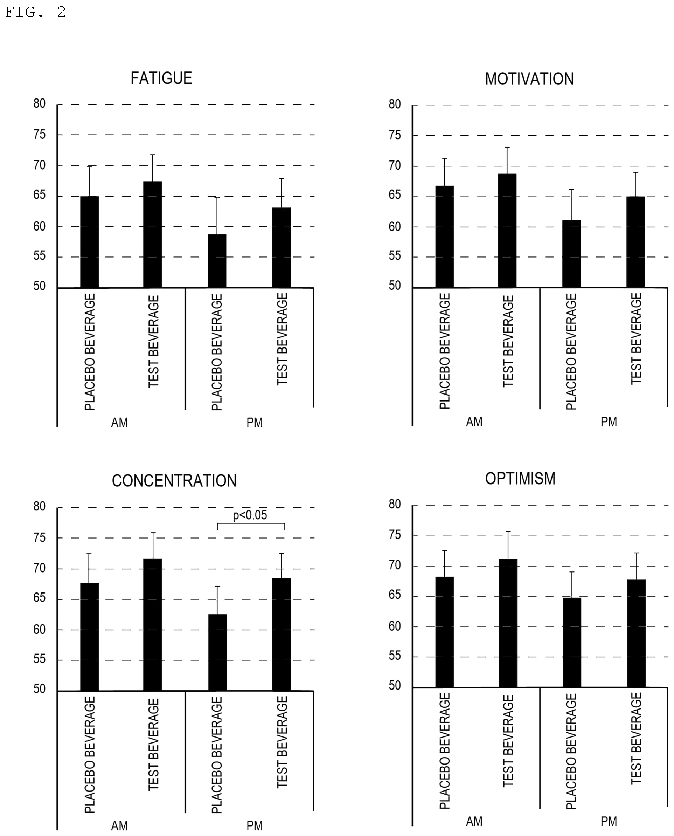

   FIG. 2 depicts the results of a subjective assessment (daytime mood indicators).
[FIG. 3]

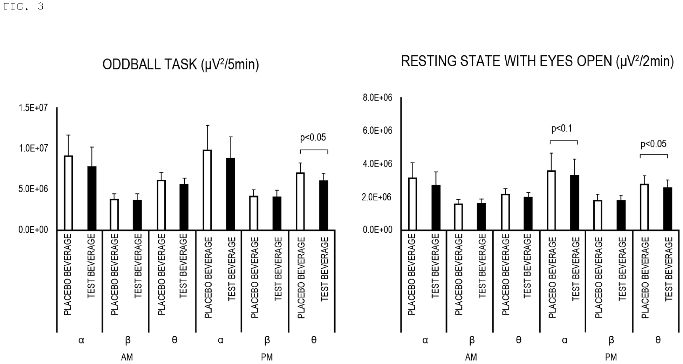

   FIG. 3 depicts the results of an objective assessment (spontaneous brain waves).
[FIG. 4]

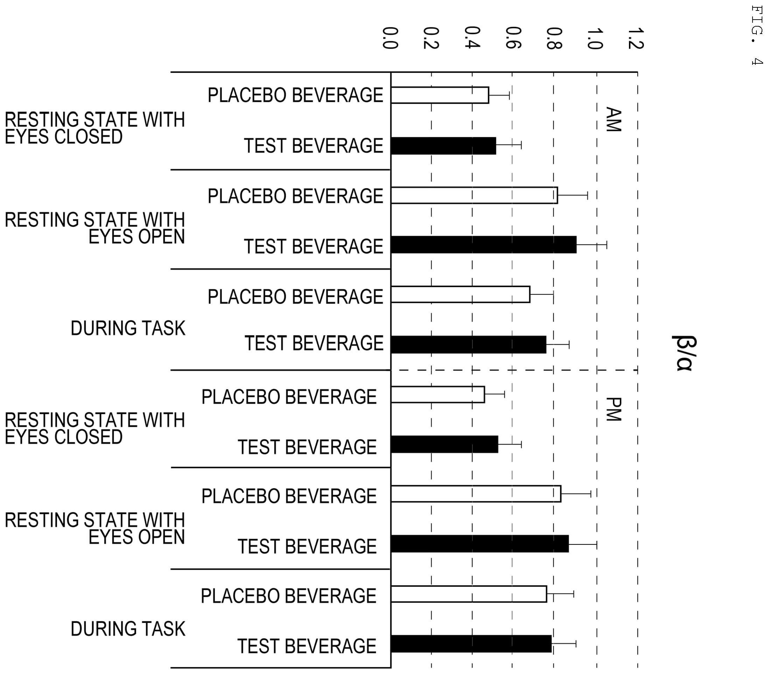

   FIG. 4 depicts the results of an objective assessment (spontaneous brain waves).
[FIG. 5]

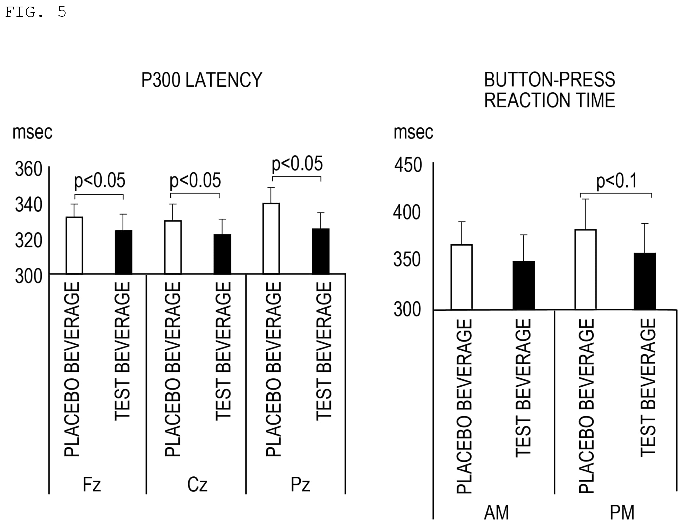

   FIG. 5 depicts the results of objective assessments (P300 latency and button-press reaction time).
[FIG. 6]

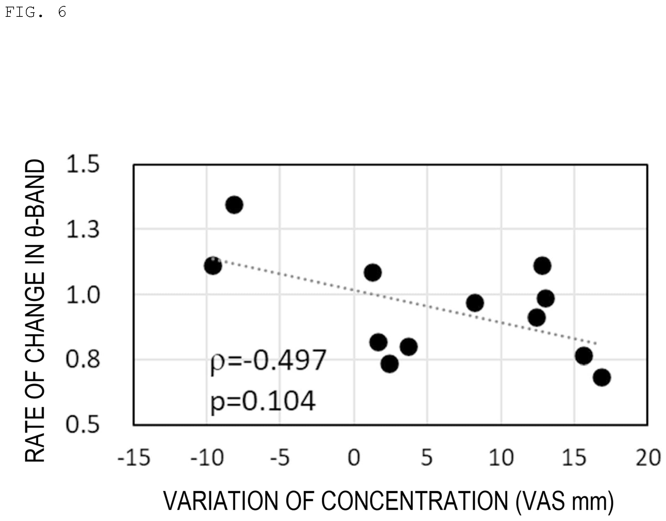

   FIG. 6 depicts a relation between a subjective assessment (variation of concentration) and an objective assessment (rate of change of θ waves).

### [Description of Embodiments]

### <Brain Function Improving agent>

The active ingredient of the brain function improving agent in the present disclosure is characterized by being at least one of bacterial cells of Lacticaseibacillus paracasei or a processed product of the bacterial cells.

In the present disclosure, the strain is not particularly limited to any kind as long as it is Lacticaseibacillus paracasei, and preferred examples thereof include Lacticaseibacillus paracasei YIT 9018 (FERM BP-665), Lacticaseibacillus paracasei YIT 9029 (FERM BP-1366), and Lacticaseibacillus paracasei YIT 10003 (FERM BP-7707). Among them, in view of an effect of improving brain functions, Lacticaseibacillus paracasei YIT 9029 (FERM BP-1366) is particularly preferred.

In regard to the above-described strains, Lacticaseibacillus paracasei strain YIT 9018 is deposited as Lactobacillus casei YIT 9018 (FERM BP-665, accession date: November 14, 1984), Lacticaseibacillus paracasei strain YIT 9029 is deposited as Lactobacillus casei YIT 9029 (FERM BP-1366, accession date: May 1, 1981), and Lacticaseibacillus paracasei strain YIT 10003 (FERM BP-7707) is deposited as Lactobacillus casei YIT 10003 (FERM BP-7707, accession date: August 14, 2001), to Patent Microorganisms Depository, National Institute of Technology and Evaluation (Room 120, 2-5-8, Kazusakamatari, Kisarazu-shi, Chiba, 292-0818, Japan), which is an international deposition authority under Budapest Treaty, according to the manner of international deposition. It should be noted that Lacticaseibacillus paracasei was designated as Lactobacillus casei in the previous classification, but has been classified as Lacticaseibacillus paracasei via the recent reclassification of Lactobacillus (Zheng et al., A taxonomic note on the genus Lactobacillus: Description of 23 novel genera, emended description of the genus Lactobacillus Beijerinck 1901, and union of Lactobacillaceae and Leuconostocaceae. Int. J. Syst. Evol. Microbiol. 2020 Apr; 70(4): 2782-2858 DOI 10.1099/ijsem.0.004107). The classification of lactic acid bacteria herein is described according to the new classification based on this reference.

In the present disclosure, a processed product of bacterial cells refers to a material derived by subjecting bacteria to be used (Lacticaseibacillus paracasei) to some treatment, and the treatment is not particularly limited to any kind.

Examples of the processed product of bacterial cells of Lacticaseibacillus paracasei include degradants of bacterial cells. Specific examples thereof include a liquid of crushed Lacticaseibacillus paracasei derived by sonication or the like, a liquid of enzyme-treated Lacticaseibacillus paracasei, and a supernatant and a solid residue thereof derived by separation by solid-liquid separation means such as filtration or centrifugation.

Further, the processed product of bacterial cells of Lacticaseibacillus paracasei in the present disclosure also includes a nucleic acid-containing fraction derived by lysing Lacticaseibacillus paracasei with a surfactant or the like and then subjecting the lysate to precipitation with ethanol or the like.

In addition, the processed product of bacterial cells of Lacticaseibacillus paracasei in the present disclosure also includes materials derived by further subjecting the liquid of crushed Lacticaseibacillus paracasei through sonication or the like, the liquid of the enzyme-treated cells, and the like to separation and purification with, for example, various kinds of chromatography.

Moreover, the processed product of bacterial cells of Lacticaseibacillus paracasei in the present disclosure also includes dead bacterial cells. The dead bacterial cells can be obtained by, for example, heating treatment, treatment with a drug such as an antibiotic, treatment with a chemical such as formalin, treatment with ultraviolet rays, or treatment with radioactive rays such as γ-rays. It should be noted that, among these treatments, ultrasonic treatment, enzymatic treatment, or heating treatment is particularly preferred in view of cost, ease of production, stability of a brain function improving agent to be obtained, or the like.

Yet, in the present disclosure, it is more preferred that viable bacterial cells be particularly used as the bacterial cells of Lacticaseibacillus paracasei and a processed product of the bacterial cells, in view of an effect of improving brain functions.

In the present disclosure, it is more preferred that the bacterial cells of Lacticaseibacillus paracasei and a processed product of the bacterial cells be in the form of a fermented material containing Lacticaseibacillus paracasei, in view of ease of ingestion, continuation of ingestion, an effect of improving brain functions, and the like. Examples of the fermented material include, in addition to fermented milk materials, fermented plant-based liquid materials such as fermented soymilk materials, fermented grain juice materials, and fermented fruit juice materials, and fermented milk materials are more preferred.

A fermented material containing Lacticaseibacillus paracasei can be obtained by, for example, culturing of Lacticaseibacillus paracasei in a milk constituent, e.g., animal milk such as cow milk, powdered milk, fat powdered milk, fat-free powdered milk, or the like at a temperature of 30°C to 40°C for four hours to 10 days. The culturing can exemplarily be performed by static standing, stirring, shaking, and sparging. More preferably, Lacticaseibacillus paracasei is inoculated and cultured singly or simultaneously with other microbes in a sterile milk medium, which is homogenized to provide a fermented milk base. Subsequently, a syrup solution prepared separately is simply added and mixed, and then is homogenized with a homogenizer or the like, followed by further addition of a flavor, thereby producing a final product.

In the present disclosure, a fermented material encompasses fermented milk, dairy products, beverages such as lactic acid bacterial beverages, hard yogurt, soft yogurt, plain yogurt, and the like specified by the Ministerial Order on Milk and Milk Products Concerning Compositional Standards, etc. The fermented material in the present disclosure also includes food and beverage products produced using Lacticaseibacillus paracasei, such as a plain-type, flavored-type, fruit-type, sweet-type, soft-type, drink-type, solid (hard)-type, frozen-type, and/or other types of fermented milk and lactic acid bacterial beverages, for example.

In the present disclosure, these fermented materials can optionally contain, in addition to a sweetener such as syrup, any components such as various other food materials, e.g., various kinds of carbohydrates, a thickener, an emulsifier, various kinds of vitamins, an antioxidant, and/or a stabilizer. Specific examples of these food materials can include carbohydrates such as sucrose, glucose, fructose, palatinose, trehalose, lactose, xylose, and maltose; sugar alcohols such as sorbitol, xylitol, erythritol, lactitol, Palatinit, hydrogenated starch syrup, and hydrogenated maltitol syrup; high intensity sweeteners such as aspartame, thaumatin, sucralose, acesulfame K, and stevia; various kinds of thickeners (stabilizers) such as agar, gelatin, carrageenan, guar gum, xanthan gum, pectin, locust bean gum, gellan gum, carboxymethyl cellulose, soybean polysaccharide, and polypropylene glycol alginate; emulsifiers such as sucrose fatty acid ester, glycerin fatty acid ester, polyglycerin fatty acid ester, sorbitan fatty acid ester, and lecithin; milk fats such as cream, butter, and sour cream; acidulants such as citric acid, lactic acid, acetic acid, malic acid, tartaric acid, and gluconic acid; various kinds of vitamins such as vitamin A, vitamin B group, vitamin C, and vitamin E group; minerals such as calcium, magnesium, zinc, iron, manganese; and flavors such as yogurt-based, berry-based, orange-based, Chinese quince-based, shiso-leaf-based, citrus-based, apple-based, mint-based, grape-based, apricot-based, pear, custard cream, peach, melon, banana, tropical, herb-based, black tea, and coffee flavors.

A known microbe other than Lacticaseibacillus paracasei can also be used in combination to produce the fermented material. Examples of such a microbe can include Bifidobacterium species such as Bifidobacterium breve, Bifidobacterium longum, Bifidobacterium bifidum, Bifidobacterium animalis, Bifidobacterium suis, Bifidobacterium infantis, Bifidobacterium adolescentis, Bifidobacterium catenulatum, Bifidobacterium pseudocatenulatum, Bifidobacterium lactis (B. lactis), and Bifidobacterium globosum; Lacticaseibacillus species such as Lacticaseibacillus paracasei and Lacticaseibacillus casei; Lactobacillus species such as Lactobacillus gasseri, Lactobacillus acidophilus, Lactobacillus helveticus, Lactobacillus delbrueckii subsp. bulgaricus, Lactobacillus delbrueckii subsp. delbrueckii, and Lactobacillus johnsonii; Ligilactobacillus species such as Ligilactobacillus salivarius; Limosilactobacillus species such as Limosilactobacillus fermentum; Liquorilactobacillus species such as Liquorilactobacillus mali; Lactiplantibacillus species such as Lactiplantibacillus plantarum; Streptococcus species such as Streptococcus thermophilus; Lactococcus species such as Lactococcus lactis subsp. lactis, Lactococcus lactis subsp. cremoris, Lactococcus plantarum, Lactococcus raffinolactis, and Lactococcus cremoris; and Enterococcus species such as Enterococcus faecalis and Enterococcus faecium. These lactic acid bacteria can be used singly as one kind or in combination of two or more kinds. Production of the fermented material with combination use of a plurality of kinds of the lactic acid bacteria provides high preference and ease of ingestion and thus is preferred.

In the present disclosure, a marketed product available as a fermented material containing Lacticaseibacillus paracasei may be used as at least one of bacterial cells of Lacticaseibacillus paracasei or a processed product of the bacterial cells. As an example, fermented milk food and beverage products that are produced by Yakult Honsha Co., Ltd. and contain viable bacteria of Lacticaseibacillus paracasei can preferably be used. Specific examples thereof include Yakult products such as "Yakult," "New Yakult," "Yakult 400," "Yakult 1000," and "Y1000"; "Joa"; "Soful"; and "Pletio," and particularly, Yakult products contain a high viable bacterial count of Lacticaseibacillus paracasei and thus preferably used.

In the present disclosure, a marketed product available as a pharmaceutical preparation may be used as at least one of bacterial cells of Lacticaseibacillus paracasei or a processed product of the bacterial cells. As an example, pharmaceutical preparations that are produced by Yakult Honsha Co., Ltd. and contain viable bacteria of Lacticaseibacillus paracasei can preferably be used. Specific examples thereof include "Yakult BL Intestinal Regulator."

The daily dose of the brain function improving agent in the present disclosure is preferably 10⁵ cfu or more, more preferably 10⁸ cfu or more, even more preferably 10¹⁰ cfu or more, particularly preferably 10¹¹ cfu or more, by viable bacterial count of Lacticaseibacillus paracasei. Further, the ingestion period is preferably five days or more, more preferably two weeks or more, even more preferably four weeks or more, particularly preferably eight weeks or more.

It is also preferred that, in the brain function improving agent in the present disclosure, Lacticaseibacillus paracasei be ingested at a density per dose equal to or more than a predetermined value. Specifically, the density per dose is preferably 10⁵ cfu or more/100 mL, more preferably 10⁸ cfu or more/100 mL, even more preferably 10¹⁰ cfu or more/100 mL, particularly preferably 10¹¹ cfu or more/100 mL, by viable bacterial count of Lacticaseibacillus paracasei. It should be noted that the inventors considered an effect of defining the density per dose of Lacticaseibacillus paracasei as follows. The reason why brain functions improve depending on the density has not yet been elucidated in detail, but the inventors investigated and inferred that stimulation to certain enteroendocrine cells increases when the density of Lacticaseibacillus paracasei to be ingested is equal to or more than a predetermined value. A substance secreted from the enteroendocrine cells that accept the stimulus is considered to stimulate the afferent vagus nerve and exert action on brain functions.

It is also particularly preferred that the brain function improving agent of the present disclosure be continuously ingested at the above-mentioned daily dose with the above-mentioned density per dose for the above-mentioned ingestion period.

The brain function improving agent in the present disclosure can be used by either oral administration or parenteral administration, and oral administration is preferred. In administration, a composition containing an active ingredient can be mixed with a pharmaceutical non-toxic carrier that is suitable for an administration method such as oral administration, rectal administration, or injection and that has a solid or liquid form, and be administered in the form of a commonly-used pharmaceutical preparation. Examples of such a preparation include solid preparations such as tablets, granules, powder, and capsules; liquid preparations such as solutions, suspensions, and emulsions; and lyophilized preparations. These preparations can be prepared by common practices for preparation production. Examples of the pharmaceutical non-toxic carrier described above include glucose, lactose, sucrose, starch, mannitol, dextrin, fatty acid glyceride, polyethylene glycol, hydroxyethyl starch, ethylene glycol, polyoxyethylene sorbitan fatty acid ester, amino acid, gelatin, albumin, water, and saline. In addition, a commonly-used additive such as a stabilizer, a humectant, an emulsifier, a binder, a tonicity agent, or an excipient can suitably be added as needed.

The inventors made extensive and intensive studies and consequently found that an excellent effect of improving brain functions is exerted when at least one of bacterial cells of Lacticaseibacillus paracasei or a processed product of the bacterial cells is ingested. Specific examples of the effect of improving brain functions include an effect of improving an attentional function, an effect of improving arousal, and an effect of improving a response to stimulation. More specific examples thereof include an effect of keeping concentration and an effect of quickly responding to stimulation.

An effect of the brain function improving agent of the present disclosure can be confirmed by at least one of a subjective assessment or an objective assessment.

Specific examples of the subjective assessment include questionnaire recorded by subjects. More specifically, the effect can be determined by conducting questionnaires including items such as fatigue, arousal, motivation, concentration, optimism, and anxiety with or without ingestion of the brain function improving agent of the present disclosure and comparing the results.

Specific examples of the objective assessment can include measurement of spontaneous brain waves and measurement of event-related potential.

With regard to spontaneous brain waves, spontaneous brain waves are constantly observed, and the degree of arousal changes corresponding to powers of α, β, θ, and δ waves classified by frequency; 0.5 to 4 Hz indicates δ waves (delta waves), 4 to 8 Hz indicates θ waves (theta waves), 8 to 13 Hz indicates α waves (alpha waves), and 13 Hz or more indicates β waves (beta waves). When the brain is in a state of activation, β waves predominate, whereas, when the brain is in a state of relaxation, α waves appear. Further, in a state of meditation or onset of sleep, θ waves increase, whereas, in a deep sleep, δ waves predominate. Measurement of δ waves (delta waves), θ waves (theta waves), α waves (alpha waves), β waves (beta waves), and/or other waves as spontaneous brain waves can determine an effect of improving brain functions in the present disclosure. For example, in a state other than sleep, reduction in θ-band power means improvement in brain functions, more specifically improvement in arousal of the brain. Specifically, when the θ-band power measured in ingestion of the brain function improving agent of the present disclosure is lower than the θ-band power in no ingestion, it can be said that brain functions are improved (arousal is improved). Further, a ratio (β/α) of β waves to α waves in spontaneous brain waves can also be an indicator of improving brain functions, specifically an indicator of attention. More specifically, when the ratio (β/α) in ingestion of the brain function improving agent of the present disclosure is higher than the ratio in no ingestion, it can be said that brain functions are improved (attention is improved).

In addition, event-related potential is a potential variation induced on human brain waves by mental activity and is a potential variation derived by application of stimulus that is mental work, thus reflects a human mind function and helps an objective evaluation thereof. Measurement of P300, N400, or the like as event-related potential can determine an effect of the brain function improving agent of the present disclosure. Particularly, it is preferred that event-related potential in the present disclosure employ event-related potential P300. Event-related potential P300 is event-related potential that appears as potential having a peak in a positive direction at approximately 300 milliseconds (ms) after stimulation, by an oddball task to direct attention of a subject to sensory stimulation that emerges randomly from a plurality of kinds of stimuli. Specifically, shortened P300 latency (time period from stimulus to a peak thereof) can confirm an effect of the brain function improving agent in the present disclosure. In general, P300 latency is known to extend in the case of reduction in brain functions, such as aging, depression, or dementia. Therefore, when peak latency is confirmed to be shortened by ingestion of the brain function improving agent of the present disclosure, it can be said that processing speed in the brain is accelerated and that arousal, concentration, or the like are enhanced. Incidentally, the continued experiments by the inventors revealed that, in general, event-related potential P300 consists of a plurality of kinds of components and is less likely to be detected as a single peak. However, in an experiment in the present disclosure, the inventors obtained the finding that ingestion of the brain function improving agent in the present disclosure results in a high detection rate of a peak of event-related potential P300. When ingestion of the brain function improving agent in the present disclosure increases a detection rate of a peak of event-related potential P300, it can be said that the ingestion contributes to assistance for acquiring P300 latency data.

The brain function improving agent of the present disclosure can provide an effect of improving brain functions without correlation with sleep time, sleep quality, or another factor. In other words, it is advantageous in that ingestion of the brain function improving agent of the present disclosure is expected to improve brain functions even when a subject is deficient in sleep or dissatisfied with the subject's own sleep (e.g., difficulty in falling asleep, arousal during sleep, vague wake-up, or strong daytime sleepiness).

### <Method for Producing Brain Function Improving agent>

A method for producing the brain function improving agent in the present disclosure is described as follows. In the method for producing the brain function improving agent in the present disclosure, it is preferred to use Lacticaseibacillus paracasei YIT 9029 (FERM BP-1366) as at least one of bacterial cells of Lacticaseibacillus paracasei or a processed product of the bacterial cells.

<Method for Improving Brain Functions>

A method for improving brain functions in the present disclosure is described as follows. The method for improving brain functions in the present disclosure includes having Lacticaseibacillus paracasei orally ingested in an amount of 10¹⁰ cfu or more/day by viable bacterial count for a continuous period of at least four weeks.

It is also preferred that the method for improving brain functions in the present disclosure include having Lacticaseibacillus paracasei orally ingested at a density per dose of 10¹⁰ cfu or more/100 mL by viable bacterial count.

It is preferred that the method for improving brain functions be more specifically a method of reducing θ-band power or a method of shortening event-related potential P300 latency. It should be noted that methods for measuring spontaneous brain waves, event-related potential, and other indicators are as mentioned above and description thereof is thus omitted here.

### Examples

The present invention will now be described in detail with reference to the examples below, but the present invention is not limited to the examples.

### Example 1 (Preparation of Test Beverage)

Lacticaseibacillus paracasei strain YIT 9029 (LcS) was inoculated to a fat-free powdered milk solution and fermented at 37°C. After addition of other materials illustrated in Table 1 below, the fermented solution was homogenized and filled in a container, thereby obtaining a test beverage. The bacterial count of Lacticaseibacillus paracasei in 100 mL of the test beverage was 10¹¹ cfu. This was stored under refrigeration (at 10°C or lower) until used.

### Reference Example 1 (Preparation of Placebo Beverage)

A placebo beverage was obtained by the same production method as that of the test beverage except for not containing Lacticaseibacillus paracasei. Materials were as in Table 1. It should be noted that, considering that sugar is metabolized to yield lactic acid in the test beverage during production, raw materials for the placebo beverage include lactic acid instead of glucose-fructose syrup.

**[Table 1]**

| Designation | Test beverage | Placebo beverage |
|---|---|---|
| Amount of functional ingredient in one dose | 10¹¹ cfu /100 mL (cfu: viable bacterial count) | - |
| Raw materials | Sugar, fat-free powdered milk, glucose-fructose syrup, high-fructose syrup, stabilizer (soybean polysaccharide), flavoring, LcS | Sugar, fat-free powdered milk, high-fructose syrup, lactic acid, stabilizer (soybean polysaccharide), flavoring |
| Content | 100 mL | |
| Form | Polystyrene container | |
| Storage condition | Chilled storage (at 10°C or lower) | |

Twelve healthy subjects dissatisfied with sleep (five males and seven females; ages: 40 to 59) ingested each of the test beverage prepared in Example 1 and the placebo beverage prepared in Reference Example 1. Incidentally, the dissatisfaction with sleep that these subjects felt included difficulty in falling asleep, wake after sleep onset, vague wake-up, strong daytime sleepiness, and the like.

The human study in the present disclosure was conducted with due care in accordance with the guidelines of the Declaration of Helsinki. The 12 healthy subjects described above, who consented to participate in the study after being informed of its contents, were randomly allocated to Group I (placebo beverage-preceding group) and Group II (test beverage-preceding group) (group I: n = 6, group II: n = 6). As described in Table 2 below, Group I ingested 100 mL of the placebo beverage prepared in Reference Example 1 once daily after dinner for four weeks, and Group II ingested the test beverage in the same manner (Period 1). In the final week of Period 1, daytime mood indicators were examined, and spontaneous brain waves and event-related potential were measured. The subjects in Group I and Group II then withdrew ingestion of the beverages for four weeks (washout period). After the washout period was finished, Group I ingested the test beverage and Group II ingested the placebo beverage for four weeks (Period 2). During the final week, examination of daytime mood indicators and measurement of spontaneous brain waves and event-related potential were performed (double-blind crossover study).

**[Table 2]**

| | | Period 1 (four weeks) | | Period 2 (four weeks) |
|---|---|---|---|---|
| Group I | Pretreatment observation period (three weeks) | Placebo beverage | Washout period (four weeks) | Test beverage |
| Group II | | Test beverage | | Placebo beverage |

### Subjective Assessment (Daytime Mood Indicators)

Daytime physical fatigue, motivation, concentration, and optimism were assessed by a questionnaire using Visual Analog Scale (VAS). The specific method thereof is described below using concentration as an example: as illustrated in FIG. 1, the left end on the black line with a length of 100 mm was defined as "Unable to concentrate at all (bad)," and the right end was defined as "Able to concentrate well (good)." A subject marked a cross at a position where the subject felt fit with the subject's own condition. The distance (mm) from the left end to the cross was defined as a variable of the item (VAS mm).

### Objective Assessment (Spontaneous Brain Waves and Event-related Potential)

Measurement of spontaneous brain waves was performed in a shield room in the morning and afternoon on any one day during the final weeks of Period 1 and Period 2 described above. A biological signal recording device (Polymate, manufactured by Miyuki Giken Co., Ltd.) was used for the measurement. In accordance with the International 10-20 system for electrode placement, Ag/AgCl electrodes were attached at three sites on the scalp, Fz (median frontal part), Cz (centromedian part), and Pz (median parietal part). In addition thereto, two electrodes placed on both ears were regarded as a reference for the scalp electrodes, and two forehead electrodes served as the ground and system reference. The electrode impedance was 10 kΩ or lower. While a subject sitting down on a chair looked fixedly at one certain point on a monitor, brain waves were recorded in a resting state with eyes open for two minutes, and subsequently, brain waves during performance of an auditory oddball task were recorded for five minutes. This process was performed for three sets as illustrated in Table 3 below, and finally, brain waves were recorded in a resting state with eyes closed for 2 minutes.

**[Table 3]**

| | | | | | | | |
|---|---|---|---|---|---|---|---|
| Condition | Resting state 1 with eyes open | Oddball task 1 | Resting state 2 with eyes open | Oddball task 2 | Resting state 3 with eyes open | Oddball task 3 | Resting state with eyes closed |
| Time | Two minutes | Five minutes | Two minutes | Five minutes | Two minutes | Five minutes | Two minutes |

In the auditory oddball task, two kinds of short sounds, 2,000 Hz and 1,000 Hz, as auditory stimulation (presentation time: 100 msec) were used and presented 150 times in total at 2.0-second intervals at incidences of 20% and 80%, respectively. The subject was instructed to push a button at hand upon hearing auditory stimulation of 2,000 Hz (targeted stimulus), and the reaction time from application of the targeted stimulus to a push of the button was also measured.

In frequency analysis of spontaneous brain waves, artifacts such as eyeball movement were removed with a band-pass filter of 0.5 to 30 Hz, Fourier transformation was performed on 120,000 points during the resting state (two minutes) and 300,000 points during performance of the oddball task (five minutes), and power spectral analysis in each frequency band (θ waves: 4 to 8 Hz, α waves: 8 to 13 Hz, β waves: 13 to 30 Hz) was performed (resting state: µV²/2 min, oddball task: µV²/5 min). For the analysis, mathematical analysis software (MATLAB) was used. To acquire and analyze event-related potential P300, analysis software (EP Travel Light, NoruPro Light Systems, Inc.) was used to obtain the signal average of wave forms detected during 30 times of targeted stimulus presentation, and the procedures were compliant with the guidelines of Japanese Society of Clinical Neurophysiology. P300 consists of two or more components, and when P300a and P300b were observed, P300b, which is elicited by targeted stimulus, was selected rather than P300a, which is elicited by deviant stimulus.

### Discussion of Daytime Mood Indicator

The results thus obtained were presented in FIG. 2. All of the items of daytime mood indicators (fatigue, motivation, concentration, and optimism) changed to exhibit higher performance in ingestion of the test beverage than that in ingestion of the placebo beverage, regardless of their measurement time period (morning or afternoon). Particularly, concentration in the afternoon was significantly increased in ingestion of the test beverage. Comparing the morning and the afternoon, the items of daytime mood indicators generally changed to exhibit reduced performance, but the score in the afternoon during the test beverage ingestion period was raised to a comparable degree as the score in the morning during of the placebo ingestion period. In other words, it was confirmed that reduction in performance in the afternoon was suppressed by ingestion of the test beverage and maintained at levels similar to those in the morning.

### Discussion of Spontaneous Brain Waves

The results thus obtained were presented in FIG. 3. Ingestion of the test beverage led to lower θ-band power than that of ingestion of the placebo beverage, and this behavior was pronounced particularly in the afternoon. Similar trends were confirmed both during the resting state with eyes open and during the oddball tasks. FIG. 4 depicts the ratios (β/α) of β waves to α waves. It was found that ingestion of the test beverage provided these ratios higher than those of ingestion of the placebo beverage, both during the oddball task and the resting state with eyes open. In other words, it was confirmed that ingestion of the test beverage improved arousal and attention. It should be noted that some subjects exhibited unchanged α waves and increased β waves, resulting in higher ratios.

### Discussion of Event-related Potential (P300 latency) and Button-press Reaction Time

The results thus obtained were presented in FIG. 5. It was demonstrated that, at each of the sites, the centromedian part (Cz), the median frontal part (Fz), and the median parietal part (Pz), ingestion of the test beverage resulted in shorter P300 latency than that of ingestion of the placebo beverage. Moreover, with regard to the button-press reaction time in the auditory oddball task, ingestion of the test beverage tended to provide a shorter button-press reaction time than that of ingestion of the placebo beverage. In other words, it was confirmed that ingestion of the test beverage improved a response to stimulation. Further, as the button-press reaction time, ingestion of the placebo beverage provided 365.9 msec in the morning and 381.6 msec in the afternoon, and ingestion of the test beverage provided 349.2 msec in the morning and 356.0 msec in the afternoon, indicating that ingestion of the test beverage produced a smaller variation than that of ingestion of the placebo beverage. In other words, it was confirmed that reduction in performance in the afternoon was suppressed by ingestion of the test beverage and maintained at levels similar to those in the morning.

It should be noted that the P300 latency depicted in FIG. 5 was measured in the morning. The event-related potential P300 consists of a plurality of components, and thus, particularly, measurement in the afternoon may fail to identify a peak, or to confirm a peak itself because of a small amplitude. In the example, measurements were performed both in the morning and the afternoon, and the detection frequency and detection rate of a peak corresponding to the event-related potential P300 were analyzed. The analysis results are summarized in Table 4.

**[Table 4]**

| Site | Beverage | Morning | | | Afternoon | | |
|---|---|---|---|---|---|---|---|
| | | Total number of detections | Detection rate (%) | P | Total number of detections | Detection rate (%) | P |
| Cz | Placebo beverage | 22/36 | 61.1 | | 17/36 | 47.2 | |
| | Test beverage | 27/36 | 75.0 | 0.312 | 23/36 | 63.9 | 0.236 |
| Fz | Placebo beverage | 24/36 | 66.7 | | 18/36 | 50.0 | |
| | Test beverage | 26/36 | 72.2 | 0.798 | 19/36 | 52.8 | 1.000 |
| Pz | Placebo beverage | 20/36 | 55.6 | | 17/36 | 47.2 | |
| | Test beverage | 27/36 | 75.0 | 0.137 | 20/36 | 55.6 | 0.638 |

As illustrated in Table 4 above, the peak detection rate in measurement in the afternoon tended to be lower than that in the morning. Meanwhile, the peak detection rate during the test beverage ingestion period tended to be higher than that during the placebo beverage ingestion period. In other words, it was confirmed that ingestion of the test beverage contributed to assist acquisition of P300 latency data. It should be noted that, in Table 4, values in a column labeled "P" represents significance probability in Fisher's Exact Test and the total number of detections represents a ratio of the number of times in which a peak corresponding to the event-related potential P300 was detectable while each of 12 subjects underwent three measurements, totaling 36 measurements.

### Relation between Subjective Assessment and Objective

### Assessment

The linkage between the subjective assessment method (daytime mood indicators) and the objective assessment method (spontaneous brain waves) was examined. FIG. 6 depicts variations of concentration in the afternoon between the test beverage and the placebo beverage ingestion periods(abscissa axis, VAS mm) as well as rates of changes in θ-band power during the resting state with eyes closed (longitudinal axis, rate), and indicates the relation between both of the variables of 12 subjects. As seen in FIG. 6, a negative correlation is observed between the two, and it is determined that the subjective indicator and the objective indicator changed in conjunction with one another in association with ingestion of the test beverage. Incidentally, FIG. 6 illustrates only the results of concentration among daytime mood indicators, but other mood indicators were also confirmed to have a correlation with spontaneous brain waves.

Preferred embodiments of the present disclosure have been described in detail so far, but the present disclosure is not limited to these examples. It is obvious that various changed or modified examples can be conceived of by one ordinary skilled in the art of the present disclosure within the scope of the claimed technical idea, and it would be appreciated that these also fall within the technical scope of the present disclosure.

## Claims

1. A brain function improving agent comprising:
at least one of bacterial cells of Lacticaseibacillus paracasei or a processed product of the bacterial cells as an active ingredient.

2. The brain function improving agent according to claim 1, wherein the Lacticaseibacillus paracasei is Lacticaseibacillus paracasei YIT 9029 (FERM BP-1366).

3. The brain function improving agent according to claim 1 or 2, wherein a viable bacterial count of the Lacticaseibacillus paracasei as a daily dose is 10¹⁰ cfu or more.

4. The brain function improving agent according to claim 1 or 2, wherein a density of the Lacticaseibacillus paracasei per dose is 10¹⁰ cfu or more/100 mL by viable bacterial count.

5. The brain function improving agent according to claim 1 or 2, wherein the brain function improving agent is at least one of an attentional function improving agent, an arousal improving agent, a response improving agent to stimulation, or a performance retainer.

6. Use of at least one of bacterial cells of Lacticaseibacillus paracasei or a processed product of the bacterial cells for producing a brain function improving agent.

7. The use according to claim 6, wherein the Lacticaseibacillus paracasei is Lacticaseibacillus paracasei YIT 9029 (FERM BP-1366).

8. A method for improving brain functions, comprising:
having Lacticaseibacillus paracasei orally ingested in an amount of 10¹⁰ cfu or more/day by viable bacterial count for a continuous period of at least four weeks.

9. The method for improving brain functions according to claim 8, comprising:
having the Lacticaseibacillus paracasei ingested in an amount of 10¹⁰ cfu or more/100 mL by viable bacterial count as a density per dose.

10. The method for improving brain functions according to claim 8 or 9, wherein the improving brain functions refers to reducing θ-band power.

11. The method for improving brain functions according to claim 8 or 9, wherein the improving brain functions refers to shortening event-related potential P300 latency.

12. Use of at least one of bacterial cells of Lacticaseibacillus paracasei or a processed product of the bacterial cells for assisting acquisition of event-related potential P300 latency.
